(19) Europäisches Patentamt
European Patent Office
Office européen des brevets

(11) Veröffentlichungsnummer: **0 000 418**
**A1**

# (12) EUROPÄISCHE PATENTANMELDUNG

(21) Anmeldenummer: **78200093.9**

(22) Anmeldetag: **08.07.78**

(51) Int. Cl.$^2$: **C08G59/50**, C09J3/16

(30) Priorität: **12.07.77 DE 2731335**

(43) Veröffentlichungstag der Anmeldung: **24.01.79**
**Patentblatt 79/2**

(84) Benannte Vertragsstaaten: **BE CH DE FR GB LU NL SE**

(71) Anmelder: **VEBA-CHEMIE AKTIENGESELLSCHAFT, Pawikerstrasse 30, D-4660 Gelsenkirchen-Buer (DE)**

(72) Erfinder: **Schülde, Felix, Dr., Am Gecksbach 20, D-4273 Wulfen (DE)**
**Obendorf, Johann, Dr., Pastorsbusch 40, D-4270 Dorsten (DE)**
**Kulisch, Volker W., Tunnelstrasse 55, D-4390 Gladbeck (DE)**

(74) Vertreter: **Steil, Johanna et al, ZA-Gewerbliche Schutzrechte Postfach 2840 Herzogstrasse 28, D-4690 Herne 2 (DE)**

## (54) Verfahren zum Verkleben von Werkstoffen.

(57) In dem Verfahren zum Verkleben von Werkstoffen werden als Kleber in der Wärme härtbare Einkomponentensysteme aus 1,2-Epoxidverbindungen mit Imidazolin-Derivaten als Härter eingesetzt. Die verwendeten Imidazoline entsprechen der allgemeinen Formel

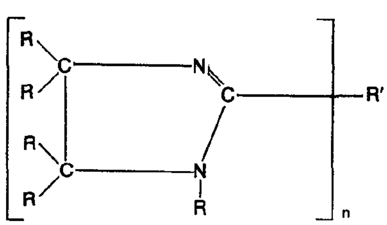

,

worin n = 1 oder 2 bedeutet, R gleiche oder verschiedene Reste aus der Gruppe Wasserstoff-, Alkyl-, Aryl-, Aralkyl-, Cycloalkyl- und heterocyclischer Rest bedeuten und R' ein Alkyl-, Aryl-, Alkylen- oder Arylen-Rest, der gegebenenfalls mit einem Alkyl-, Aryl-, Aralkyl-, Cycloalkyl- oder heterocyclischen Rest substituiert sein kann und im Fall von n = 1 auch Wasserstoff bedeutet, wobei ausserdem mehrere Reste vorhanden sein können.

Besonders geeignete Imidazoline sind z. B. 2-Phenylimidazolin oder 1-Phenyl-4-methyl-imidazolin; sie werden in Mengen von 3–60 Gew.%, insbesondere 4–40 Gew.%, bezogen auf das Harz-Härter-System, eingesetzt. Die zu verklebenden Werkstoffe können metallischer oder nichtmetallischer Art sein.

EP 0 000 418 A1

Gelsenkirchen-Scholven, den

VEBA-CHEMIE AKTIENGESELLSCHAFT
Gelsenkirchen-Buer

# Verfahren zum Verkleben von Werkstoffen

## Beschreibung und Beispiele

Unter der Vielzahl der zum Verkleben von Werkstoffen verwendeten Stoffe, wie Vinylpolymerisate, Butadienpolymerisate, Olefinpolymerisate, Ketonharze, Alkydharze, Alkyl-, Terpen- u.a. modifizierte Phenolharze, Phenol-Formaldehydharze, ungesättigte Polyester, Polyurethane und andere, nehmen die Epoxidverbindungen einen breiten Raum ein.

Epoxidverbindungen mit mehr als einer Epoxygruppe im Molekül, gelegentlich auch als Epoxidharze bezeichnet, eignen sich besonders zum Verkleben unporöser Werkstoffe, wie Metalle. Aufgrund der dichten, undurchlässigen Metalloberfläche können flüchtige Bestandteile nicht aus den Klebefugen entweichen. Für die Verklebung von Metallen werden daher Klebstoffe bevorzugt, die lösungs- und dispergiermittelfrei sind und bei deren Vernetzung keine Spaltprodukte entstehen. Diese Voraussetzungen werden von Klebstoffen auf Epoxidharzbasis erfüllt.

Epoxidharze (im Schrifttum auch Äthoxylinharze genannt) sind Umsetzungsprodukte von Alkylenoxiden mit beispielsweise Polyphenolen, die mit Hilfe von Härtungsmitteln irreversibel gehärtet werden. Der Härtungsprozeß hat die Aufgabe, die Klebstoffschicht

unlöslich und unschmelzbar zu machen. Bei der Härtung dieser Harze werden keine Spaltprodukte frei, so daß kein Substanzverlust entsteht und meist eine schrumpffreie Härtung erreicht wird.

Es ist bekannt, als Härter für Epoxidharz-Klebstoffe beispielsweise Polycarbonsäuren und ihre Anhydride, Polyalkohole, Amine, Amide, Amidoamine, aber auch Phenol-Formaldehyd- und Carbamid-Formaldehyd-Vorkondensate, Polyester, Alkoholate mehrwertiger Metalle, Metallsalze von Sikkativsäuren, Metallphenolate, komplexe Zinnverbindungen, Zinkfluorborat, Polyisocyanate und Titansäureester einzusetzen.

Bei der dem Stand der Technik entsprechenden Verwendung dieser gebräuchlichen Härter liegen die gebrauchsfertigen Kleber entweder als Zweikomponenten-Systeme vor, da beim Zusammengeben von Harz und Härter sofort die Härtungsreaktion einsetzt; oder die Härter werden als sog. latente Härter dem Harz beigegeben und die Härtungsreaktion setzt erst bei erhöhten Temperaturen ein. Im ersteren Fall ist beim Gebrauch dieser Kleber eine Topfzeit zu beachten, nach deren Überschreitung eine weitere Verarbeitung nicht mehr erfolgen kann. Im zweiten Fall werden zur Härtung relativ hohe Temperaturen und lange Zeiten benötigt, was nicht bei allen Werkstoffen anwendbar ist. Daneben ist bei den meisten dieser gebräuchlichen Härter eine physiologische Unbedenklichkeit nicht gegeben.

Ziel der vorliegenden Erfindung war es, geeignete Epoxidharz-Härtemittel-Systeme für Verklebungen zu finden, die eine Formulierung von Zweikomponenten-Systemen überflüssig machen und eine Aushärtung der Verklebung schon bei relativ niedrigen Temperaturen und in kurzen Zeiten ermöglichen.

Es wurde nun überraschenderweise gefunden, daß man zu Verklebungen von Werkstoffen ohne die beschriebenen Nachteile gelangt, wenn man Epoxidharze mit speziellen Imidazolinen als Härter einsetzt.

Gegenstand der Erfindung ist daher ein Verfahren zum Verkleben von Werkstoffen unter Verwendung von in der Wärme härtbaren Einkomponenten-Systemen aus 1.2-Epoxidverbindungen mit mindestens einer 1.2-Epoxidgruppen im Molekül und cyclischen Amidinen sowie gegebenenfalls den üblichen Zusätzen, dadurch gekennzeichnet, daß man als cyclische Amidine Imidazolin-Derivate der allgemeinen Formel

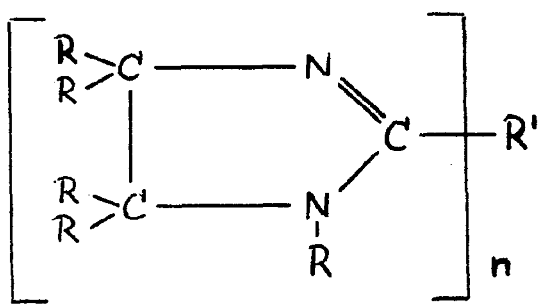

verwendet, in welcher n = 1 oder 2 sein kann, R gleiche oder verschiedene Reste aus der Gruppe Wasserstoff-, Alkyl-, Aryl-, Aralkyl-, Cycloalkyl- und heterocyclischer Rest bedeuten und R' einen Alkyl-, Aryl-, Alkylen- oder Arylenrest, der gegebenenfalls mit einem Alkyl-, Aryl-, Aralkyl-, Cycloalkyl- oder heterocyclischen Rest substituiert sein kann und im Falle von n = 1 auch Wasserstoff bedeutet, wobei außerdem mehrere Reste vorhanden sein können.

Die vorstehend beschriebenen Imidazolin-Derivate gelangen besonders in Mengen von insbesondere 3 - 60 Gew.-%, vorzugsweise 4 - 40 Gew.-%, bezogen auf die Harzgewichtsmengen Härter, zum Einsatz. Es können unter Umständen auch kleinere oder größere Zusätze vorteilhaft sein.

Geeignete cyclische Amidine im Sinne der vorliegenden Erfindung, die der früher beschriebenen allgemeinen Formel entsprechen, sind beispielsweise: 2-Phenylimidazolin, 2-Phenyl-4-methyl-imidazolin, 2-(m-Tolyl)-4-methyl-imidazolin, 2-(m-Pyridyl)-imidazolin, 1,4-Tetramethylen-bis-(4-methyl-imidazolin-2), 2-Methyl-imidazolin, 2,4-Dimethyl-imidazolin, 2-Äthyl-imidazolin, 2-Äthyl-4-methyl-imidazolin, 2-Benzyl-imidazolin, 2-(o-Tolyl)-imidazolin, 2-(p-Tolyl)-imidazolin, Tetramethylen-bis-imidazolin, 1,1,3-Trimethyl-1,4-tetramethylen-bis-imidazolin, 1,1,3-Trimethyl-1,4-tetramethylen-bis-4-methyl-imidazolin, 1,3,3-Trimethyl-1,4-tetramethylen-bis-4-methylimidazolin, 1,2-Phenylen-bis-imidazolin, 1,3-Phenylen-bis-4-methyl-imidazolin u.a.m. Es können auch Gemische der Imidazolin-Derivate erfindungsgemäß eingesetzt werden.

Die erfindungsgemäß einsetzbaren Imidazolin-Derivate können nach bekannten Verfahren aus gegebenenfalls substituierten geminalen Diaminen und aliphatischen oder aromatischen Mono- bzw. Dinitrilen gegebenenfalls in Gegenwart von $H_2S$, elementarem Schwefel oder Sulfurylchlorid als Katalysator hergestellt werden.

Aus der großen Zahl der 1,2-Epoxidverbindungen, welche erfindungsgemäß eingesetzt werden können, seien genannt: Die Epoxide aus ein- oder mehrfach ungesättigten Kohlenwasserstoffen: Äthylen, Propylen, Butylen, Butadien, Cyclohexen, Vinylcyclohexen, Dicyclopentadien, Cyclododecatrien, Polybutadiene, Styrol; halogenhaltige Epoxide, wie Epichlorhydrin; Epoxiäther der einfachen Alkohole, Methyl-, Äthyl-, Butyl-, 2-Äthylhexylalkohol; Epoxiäther mehrwertiger Alkohole: Äthylen-, Propylen-, Butylenglykol, Polyglykol, Glycerin, Pentaerythrit; Epoxidäther ein- und mehrwertiger Phenole: Phenol, Kresol, Resorcin, Hydrochinon, 4,4'-Dihydroxidiphenyl, 4,4'-Dihydroxidiphenylmethan, 2,2-Bis-(4-hydroxiphenyl)-propan, 4,4'-Dihydroxidiphenylsulfon, Phenol-Formaldehyd-Kondensationsprodukte; N-haltige Epoxide: das

N,N-Diglycidylanilin, N,N'-Dimethyldiglycidyl-4,4'-diaminodiphenylmethan. Bevorzugt werden solche, die mehr als eine Epoxigruppe im Molekül besitzen.

Ebensogut wie die reinen Epoxidverbindungen können auch deren Gemische, beispielsweise solche von Mono- und Polyepoxiden erfindungsgemäß umgesetzt werden.

Die Herstellung der erfindungsgemäßen Klebstofformulierungen erfolgt in denkbar einfacher Weise: Zunächst werden die Epoxidharze, soweit es sich um Festharze handelt, zerkleinert. Danach werden beide Reaktionspartner innig miteinander vermischt, wobei für eine gleichmäßige Verteilung der erfindungsgemäßen Amidine im Epoxidharz gesorgt wird. Gelangen feste Epoxidharze zum Einsatz, sollte die Korngröße des so erhaltenen Pulvers nicht über 500 µm betragen. Eine Zugabe von Lösungsmittel ist nicht erforderlich - die bei der Verwendung von flüssigen oder halbflüssigen Epoxidharzen in diesen gegebenenfalls enthaltenen sog. reaktiven Verdünner werden in diesem Sinne nicht als Lösungsmittel verstanden.

Die so erhaltenen Klebstofformulierungen können erforderlichenfalls mit üblichen Zusätzen, wie Füllstoffen, Pigmenten, Farbstoffen u.a. versetzt werden - so können Harz und/oder Härter beispielsweise angefärbt werden, um sichtbare Klebefugen unauffälliger erscheinen oder aber sog. Schattenfugen besonders hervortreten zu lassen.

Das erfindungsgemäße Verfahren kann Verwendung finden zum Verkleben der mannigfaltigsten Werkstoffe, z.B. Metalle, Leichtmetalle, aber auch nichtmetallische Werkstoffe wie Keramik, Glas, Leder, Gummi, Holz, temperaturbeständiger Kunststoff u.a. mit sich selbst oder mit anderen Werkstoffen. Auch kann es zur Herstellung von Sandwichkonstruktionen aus Metallen und anderen Werkstoffen herangezogen werden.

Die mit den erfindungsgemäß eingesetzten Amidinen formulierten Klebstoffe erfüllen voll die Forderung nach Lösungsmittelfreiheit, außerdem liegen sie als Einkomponenten-Systeme vor. Dadurch entfallen die eingangs geschilderten Nachteile wie Ablüft- und Topfzeit und es erfolgt eine schwundfreie Härtung ohne die Bildung von Spaltprodukten. Durch diese Eigenschaften sind sie u.a. bestens geeignet zum Verkleben unporöser Werkstoffe, wie z.B. Metallen. Durch die benötigten relativ niedrigen Härtungstemperaturen ist u.a. eine Verklebung von temperaturempfindlichen Werkstoffen, wie gelötete Metallteile, möglich.

Weiterhin wurde festgestellt, daß als wesentlicher technischer Fortschritt die Applikation der erfindungsgemäßen Klebstoffformulierungen im Falle der Verwendung von festen Epoxidharzen auf elektrostatischem Wege erfolgen kann. Damit ist es möglich, exakt dosierbare, dünne Schichten aufzubringen, was beispielsweise beim Verkleben von Folien von Vorteil ist.

Als weitere Vorteile müssen die gute Temperaturbeständigkeit der Verklebungen, ihre Chemikalienresistenz sowie im besonderen ihre Waschlaugen- und Heißwasserbeständigkeit hervorgehoben werden. Außerdem haben akute orale Toxizitätsprüfungen ($LD_{50}$, Ratte) der ausgehärteten Verklebungen, die mit den erfindungsgemäßen Amidinen hergestellt wurden, ergeben, daß diese Formulierungen als nicht toxisch anzusehen sind.

Das erfindungsgemäße Verfahren wird durch die nachstehenden Beispielle illustriert.

Allgemeine Beschreibung der angewandten Methodik

Die verwendeten 1,2-Epoxidverbindungen, in der Praxis als Epoxidharze bezeichnet, wurden mit den erfindungsgemäß eingesetzten Amidinen in den angegebenen Gewichtsverhältnissen innig vermischt. Im Falle der Verwendung von Festharzen (Beispiele 1 bis 3) wurden beide Komponenten vorzerkleinert, gemischt und auf eine Korngröße

unter 500 µm vermahlen. Bei der Verwendung von Flüssigharzen (Beispiele 4 bis 8) wurden die erfindungsgemäßen Amidine fein gemahlen und in die Harze eingemischt, bis sie gleichmäßig verteilt waren. Die so erhaltenen Klebstofformulierungen wurden auf verschiedene Substrate aufgebracht und diese anschließend bei den angegebenen Temperaturen und Zeiten verklebt. Die Abmessungen der Probekörper sowie die überlappte, d.h., verklebte Fläche entsprachen DIN 53 273. Zur Charakterisierung der erhaltenen Verklebungen wurde die Scherfestigkeit gemäß obiger Norm ermittelt. Ergänzend muß erwähnt werden, daß die verwendeten Werkstoffe für diese Versuche zwar entfettet wurden, aber sonst keinerlei Vorbehandlung (wie Aufrauhen, Anätzen o.ä.) vorgenommen worden ist.

## Beispiel 1

2-Phenyl-imidazolin wurde mit einem Epoxidharz nach folgender Formulierung kombiniert:

| | | |
|---|---|---|
| Festes Epoxidharz, auf der Basis eines Adduktes aus 2,2-Bis-(4-hydroxyphenyl)-propan (Dian) und Epichlorhydrin, welches einer HCI-Abspaltung unterworfen und anschließend mit weiterem Dian umgesetzt wurde; mit einem Epoxidwert von 0,10-0,11 | : | 94,0 Gew.-% |
| 2-Phenyl-imidazolin | : | 6,0 Gew.-% |
| | | 100,0 Gew.-% |

Mit dieser Harz-Härter-Formulierung wurden Testkörper aus verschiedenen Werkstoffen verklebt und nach 30- bzw. 60-minütiger Härtung bei 100/120/140°C folgende Scherfestigkeitswerte gemessen:

| Werkstoff | Härtungs-dauer (min) | Scherfestigkeit (kp/cm²) Härtungstemperatur (°C) 100 | 120 | 140 |
|---|---|---|---|---|
| Zinkblech | 30 | 3,0 | 8,6 | 13,8 |
| Aluminium-blech | 30 | 2,0 | 9,1 | 42,2 |
| Testgummi | 30 | 2,0 | 5,7 | 6,3 |
| $V_2A$ | 30 | 4,1 | 15,5 | 33,1 |
| $V_2A$ | 60 | 8,0 | 75,0 | 127,0 |

Beispiel 2

Die Harz-Härter-Formulierung des Beispiels 1 wurde auf elektrostatischem Wege auf Testkörper aus $V_2A$ appliziert und diese verklebt:

| Härtungsdauer (min) | Härtungstemperatur (°C) | Scherfestigkeit (kp/cm²) |
|---|---|---|
| 20 | 140 | 5,0 |
| 5 | 200 | 4,0 |

Beispiel 3

2-Phenyl-4-methyl-imidazolin wurde mit dem Epoxidharz des Beispiels 1 formuliert:

| | | |
|---|---|---|
| Epoxidharz | : | 95,8 Gew.-% |
| 2-Phenyl-4-methyl-imidazolin | : | 4,2 Gew.-% |
| | | 100,0 Gew.-% |

Nach 30-minütiger Härtung wurden an $V_2A$-Verklebungen folgende Werte gemessen:

| Härtungstemperatur (°C) | Scherfestigkeit ($kp/cm^2$) |
|---|---|
| 100 | 6,9 |
| 120 | 8,8 |
| 140 | 38,3 |

Beispiel 4

2-Phenyl-imidazolin wurde mit einem Epoxidharz wie folgt formuliert:

| | | |
|---|---|---|
| Epoxidharz, d.h., ein Diglycidyläther, des 2,2-Bis-(4-hydroxyphenyl)-propans mit einem Epoxidwert von 0,50-0,55 und einen sog. reaktiven Verdünner enthaltend | : | 76,3 Gew.-% |
| 2-Phenyl-imidazolin | : | 23,7 Gew.-% |
| | | 100,0 Gew.-% |

Mit dieser Formulierung wurden $V_2A$-Testkörper während 30 Minuten bei 150°C verklebt und anschließend eine Scherfestigkeit von 20,7 $kp/cm^2$ gemessen.

Beispiel 5

2-Phenyl-imidazolin wurde mit einem Epoxidharz nach folgender Formulierung kombiniert:

| | | |
|---|---|---|
| Epoxidharz, d.h., ein Diglycidyläther des 2,2-Bis-(4-hydroxyphenyl)-propans mit einem Epoxidwert von 0,51-0,56 | : | 76,0 Gew.-% |
| 2-Phenyl-imidazolin | : | 24,0 Gew.-% |
| | | 100,0 Gew.-% |

Mit dieser Formulierung wurden Testkörper aus $V_2A$ verklebt und anschließend bei ± 0°C, 20°C und 80°C die Scherfestigkeit ermittelt. Außerdem wurden die Verklebungen 3 Tage einer Temperaturbelastung von 80°C ausgesetzt und erneut auf ihre Scherfestigkeit geprüft.

| Härtungsdauer (min) | Härtungstemperatur (°C) | Scherfestigkeit bei | | |
|---|---|---|---|---|
| | | | ($kp/cm^2$) | (°C) |
| 300 | 80 | | 24,0 | 20 |
| 30 | 150 | | 55,9 | 0 |
| 30 | 150 | | 18,7 | 20 |
| 30 | 150 | sofort | 108,8 | 80 |
| | | nach 3 Tagen | 120,3 | 80 |

## Beispiel 6

Mit der Formulierung des Beispiels 5 wurden Testkörper aus $V_2A$ einerseits mit solchen aus Testgummi andererseits während 30 Minuten bei 100°C verklebt und anschließend eine Scherfestigkeit von 11,6 $kp/cm^2$ gemessen.

## Beispiel 7

Mit der Formulierung des Beispiels 5 wurden 2 mm starke Holzleisten während 24 Stunden bei 50°C verklebt. Die Scherfestigkeit konnte hieran nicht gemessen werden, jedoch wird die Klebefestigkeit dadurch charakterisiert, daß es nicht möglich war, die verklebten Testkörper von Hand auseinanderzuziehen.

Beispiel 8

2-Phenyl-imidazolin wurde mit einem Epoxidharz nach folgender Formulierung kombiniert:

| | | |
|---|---|---|
| Epoxidharz, basierend auf aliphatischen Polyolen, mit einem Epoxidwert von 0,60-0,64 | : | 53,0 Gew.-% |
| 2-Phenyl-imidazolin | : | 47,0 Gew.-% |
| | | 100,0 Gew.-% |

Mit dieser Formulierung wurden $V_2A$-Testkörper während 30 Minuten bei 150°C verklebt und anschließend eine Scherfestigkeit von 76,0 kp/cm² gemessen.

st.-br.-wi

0000418

Gelsenkirchen-Scholven, den 07.07.1977

VEBA-CHEMIE AKTIENGESELLSCHAFT
Gelsenkirchen-Buer

---

Verfahren zum Verkleben von Werkstoffen

---

## Patentansprüche

1. Verfahren zum Verkleben von Werkstoffen unter Verwendung von in der Wärme härtbaren Einkomponenten-Systemen aus 1,2-Epoxidverbindungen mit mindestens einer 1,2-Epoxidgruppe im Molekül und cyclischen Amidinen sowie gegebenenfalls den üblichen Zusätzen, d a d u r c h g e k e n n z e i c h n e t , daß man cyclische Amidine Imidazolin-Derivate der allgemeinen Formel

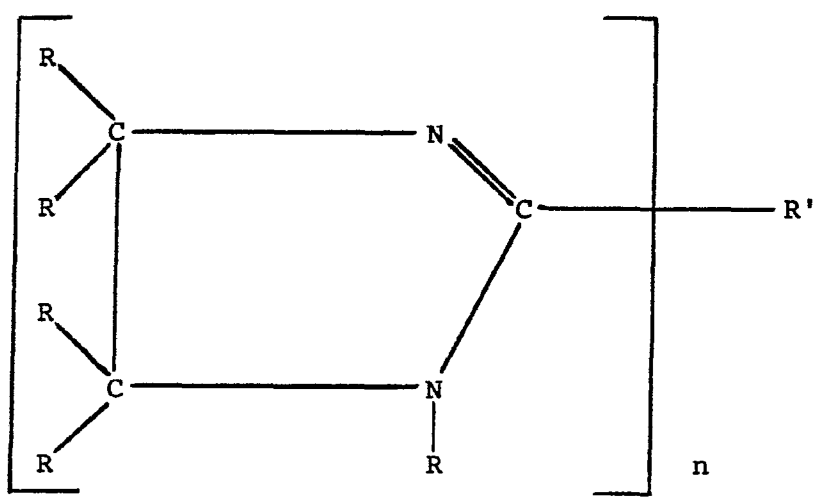

verwendet, in welcher n = 1 oder 2 bedeutet, R gleiche oder verschiedene Reste aus der Gruppe Wasserstoff-, Alkyl-, Aryl-, Aralkyl-, Cycloalkyl- und heterocyclischer Rest bedeuten und R' ein Alkyl-, Aryl-, Alkylen- oder Arylen-Rest, der gegebenenfalls mit einem Alkyl-, Aryl-, Aralkyl-, Cycloalkyl- oder heterocyclischen Rest substituiert sein kann und im Fall von n = 1 auch Wasserstoff bedeutet, wobei außerdem mehrere Reste vorhanden sein können.

2. Verfahren nach Anspruch 1, d a d u r c h g e k e n n z e i c h n e t , daß man die Imidazolin-Derivate in Mengen von 1 bis 60 Gew.-%, vorzugsweise 2 bis 40 Gew.-%, bezogen auf das Harz-Härter-System, einsetzt.

3. Verfahren nach den Ansprüchen 1 und 2, d a d u r c h g e k e n n z e i c h n e t , daß man 2-Phenyl-imidazolin bzw. 2-Phenyl-4-methyl-imidazolin verwendet.

Europäisches Patentamt

# EUROPÄISCHER RECHERCHENBERICHT

Nummer der Anmeldung
EP 78 20 0093
0000418

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | CHEMICAL ABSTRACTS, vol. 87, 24265n (1977)<br>& JP - A - 77 43834 (MATSUSHITA)<br>* Englische Zusammenfassung *<br>-- | 1-3 |
| A | FR - A - 2 202 138 (VEBA-CHEMIE)<br>* Patentanspruch 1; Seite 3, Zeilen 19-37 *<br>---- | 1-3 |

KLASSIFIKATION DER ANMELDUNG (Int.Cl.²)

C 08 G 59/50
C 09 J 3/16

RECHERCHIERTE SACHGEBIETE (Int. Cl.²)

C 08 G 59/50
C 09 J 3/16

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 11-09-1978 | DECOCKER |